# EUROPEAN PATENT SPECIFICATION

(11) **EP 2 345 976 B1**
(45) Date of publication and mention of the grant of the patent: **07.02.2018**
(21) Application number: 10197178.6
(22) Date of filing: 28.12.2010
(51) Int. Cl.: G06F 21/60, G06F 21/31

(54) **Image processing apparatus, authentication system, and computer-readable storage medium**
Bildverarbeitungsvorrichtung, Authentifizierungssystem und computerlesbares Speichermedium
Appareil de traitement d'images, système d'authentification et support de stockage lisible sur un ordinateur

(30) Priority: 06.01.2010 JP 2010001469
(43) Date of publication of application: 20.07.2011
(73) Proprietor: Ricoh Company, Ltd., Tokyo 143-8555 (JP)
(72) Inventor: Kamishiro, Daisuke, Tokyo 143-8555 (JP)
(74) Representative: Schwabe - Sandmair - Marx

(56) References cited:
- US-A1- 2006 256 370
- US-A1- 2007 103 712
- US-A1- 2009 208 141
- SANDHU R S ET AL: "ACCESS CONTROL: PRINCIPLES AND PRACTICE", IEEE COMMUNICATIONS MAGAZINE, IEEE SERVICE CENTER, PISCATAWAY, US, vol. 32, no. 9, 1 September 1994 (1994-09-01), pages 40-48, XP000476554, ISSN: 0163-6804, DOI: DOI:10.1109/35.312842

## Description

### BACKGROUND OF THE INVENTION

### 1. Field of the Invention

The present invention generally relates to image processing apparatuses, authentication systems, and computer-readable storage media, and more particularly to an image processing apparatus having a display unit suited to display operation screens of a plurality of application software to be implemented in the image processing apparatus to realize installed features, an authentication system that includes such an image processing apparatus, and a computer-readable storage medium that stores a program for causing a computer to execute a process of the image processing apparatus or the authentication system. The present invention also relates to display units and display control methods that may be employed in such an image processing apparatus or authentication system.

### 2. Description of the Related Art

Recent image processing apparatuses may be used in various environments, and are thus installed with a plurality of application software (hereinafter simply referred to as applications) to realize certain installed features (or functions), such as copy, scanner, facsimile, and printer features. In addition, the image processing apparatus includes a display unit or an operation panel that displays an operation screen (or application screen) for each application in order to conveniently provide the features.

The image processing apparatus described above may include a feature to manage the applications, and may further include a feature to manage the application screens or to control transitions of the application screens. For example, a Japanese Laid-Open Patent Publication No.2007-49677 proposes a system that integrally forms a management mechanism to manage the applications installed in the image processing apparatus, by realizing the transitions of the application screens via an application selection screen that is displayed by a screen manager.

However, the proposed system described above requires a relatively large number of operations to be performed when realizing the transition of the application screen. For example, if the user wishes to use the facsimile feature after using the copy feature, the proposed system requires a transition from a copy screen back to an application selection screen, and then a transition from the application selection screen to a facsimile screen. In other words, the screen transition cannot be made from the copy screen directly to the facsimile screen. For this reason, although the user is only making one selection of the feature, namely, the facsimile feature, the user must perform two operations, namely, a first operation to cause the transition from the copy screen back to the application selection screen and a second operation to cause the transition from the application selection screen to the facsimile screen.

As a result, as the number of features the user wishes to use increases, the number of operations the user must perform increases considerably and the user is required to perform troublesome operations in order to change an application that is being used to another application. Consequently, the proposed system described above may not provide a user-friendly user interface that is simple and easy to use.

US 2007/0103713 discloses a system and method for restricting access to a shared multifunctional peripheral.

SANDHU R S ET AL: "ACCESS CONTROL: PRINCIPLES AND PRACTICE", IEEE COMMUNICATIONS MAGAZINE, IEEE SERVICE CENTER, PISCATAWAY, US, vol. 32, no. 9, 1 September 1994 (1994-09-01), pages 40-48, XP000476554, ISSN: 0163-6804, DOI: DOI:10.1109/35.312842 discloses to govern execution of programmes by access control based on assigining user rights.

US 2006/0256370 discloses an image forming device provided with a user determining portion and an authentication process requesting portion.

### SUMMARY OF THE INVENTION

Accordingly, it is a general object in one embodiment of the present invention to provide a novel and useful image processing apparatus, authentication system, and computer-readable storage medium, in which the problem described above may be suppressed.

The invention is defined by the independent claims. The dependent claims relate to preferred embodiments of the invention.

Other objects and further features of the present invention will be apparent from the following detailed description when read in conjunction with the accompanying drawings.

### BRIEF DESCRIPTION OF THE DRAWINGS

FIG. 1 is a diagram illustrating an example of a structure of an authentication system in an embodiment of the present invention;
FIG. 2 is a block diagram illustrating an example of a hardware structure of an image processing apparatus in the embodiment of the present invention;
FIG. 3 is a block diagram illustrating an example of a hardware structure of an operation panel in the embodiment of the present invention;
FIGS. 4A and 4B are diagrams for explaining examples of transitions of application screens;
FIG. 5 is a block diagram illustrating an example of a functional structure of the image processing apparatus in the embodiment of the present invention;
FIG. 6 is a diagram illustrating an example of data of application information in the embodiment of the present invention;
FIGS. 7A and 7B are diagrams illustrating examples of data of management information in the embodiment of the present invention;
FIG. 8 is a diagram illustrating an example of data of user information in the embodiment of the present invention;
FIG. 9 is a sequence diagram illustrating an example of a processing procedure to register and update the management information of a display screen in the embodiment of the present invention;
FIG. 10 is a sequence diagram illustrating an example of a processing procedure to display the application screen;
FIG. 11 is a sequence diagram illustrating an example of the processing procedure to display the application screen;
FIG. 12 is a sequence diagram illustrating an example of the processing procedure to display the application screen; and
FIGS. 13A and 13B are diagrams illustrating examples of the transition of the application screen in the embodiment of the present invention.

### DESCRIPTION OF THE PREFERRED EMBODIMENTS

A description will be given of embodiments of the image processing apparatus, an authentication system, and a computer-readable storage medium, by referring to the drawings.

### (System Structure)

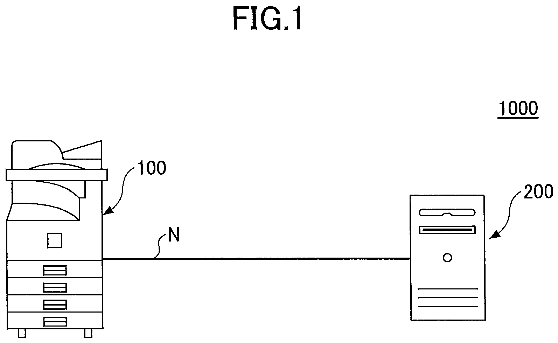

FIG. 1 is a diagram illustrating an example of a structure of an authentication system in an embodiment of the present invention. An authentication system 1000 includes at least one image processing apparatus 100 and an authentication management apparatus (or authentication server) 200 that are connected via a predetermined data channel N, such as a network including a LAN (Local Area Network).

The image processing apparatus 100 may be formed by an equipment having an image processing function used for office work, for example, such as a MFP (Multi-Function Peripheral) and a LP (Laser Printer). The authentication management apparatus 200 may be formed by an information processing apparatus that centrally manages equipment use restrictions of users, based on user authentication received from the image processing apparatus 100, for example. The user authentication information may include a user ID (IDentifier) and a password. The authentication management apparatus 200 may carry out an authentication process described hereunder.

The authentication management apparatus 200 judges whether the use of the equipment is to be permitted with respect to a user who wishes to use the image processing apparatus 100, based on the user authentication information that is received, and notifies a judgement result (or authentication result) indicating whether the use is permitted or prohibited with respect to the user via the image processing apparatus 100. For example, the user authentication information may be input to the image processing apparatus 100 by a manual input from an operation panel (not illustrated) of the image processing apparatus 100 or, by reading an authentication card (not illustrated) that includes an IC (Integrated Circuit) tag by a card reader (not illustrated) that may be coupled to the image processing apparatus 100 or provided in the image processing apparatus 100, for example.

In order to perform the authentication process described above, the authentication management apparatus 200 retains user information, that is registered information of authenticated users who are permitted to use the image processing apparatus 100. The user information includes, in addition to the user authentication information described above, information (that is, use-permitted application list) that restricts the use for each of the installed functions (or installed applications) of the image processing apparatus 100.

The authentication system 1000 having the system structure described above may provide an authentication management service (or authentication management function) to prevent unauthorized use of the image processing apparatus 100.

### (Hardware Structure)

Next, a description will be given of a hardware structure of the image processing apparatus 100.

### (Image Processing Apparatus)

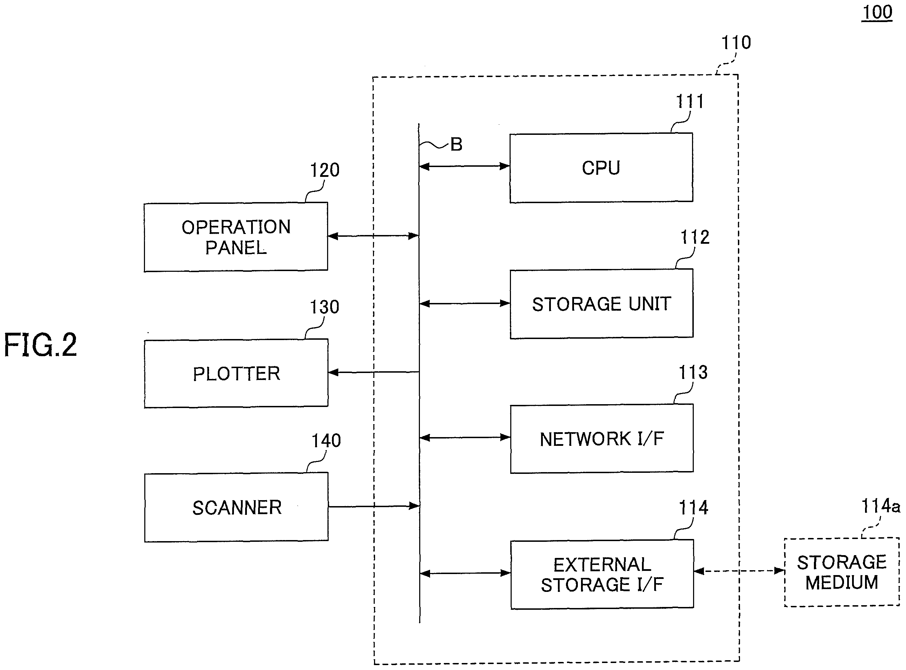

FIG. 2 is a block diagram illustrating an example of the hardware structure of the image processing apparatus 100 in the embodiment of the present invention. As illustrated in FIG. 2, the image processing apparatus 100 includes a controller 110, an operation panel 120, a plotter 130, and a scanner 140 that are connected via a bus B.

The operation panel 120 includes a display part to provide various information, such as equipment information, to the user, and an input part to accept various user operations, such as operation settings and operation instructions. The plotter 130 includes an image forming part to form an output image on a recording medium, such as paper. The output image may be formed by an electrophotography process or, an inkjet recording process, for example. The scanner 140 optically reads a document and generates image data of the read document.

The controller 110 includes a CPU (Central Processing Unit) 111, a storage unit 112, a network interface (I/F) 113, and an external storage interface (I/F) 114 that are connected via the bus B.

The CPU 111 executes programs to control the entire image processing apparatus 100. The storage unit 112 stores the programs and various data, including the image data, for example. The storage unit 112 may be formed by a volatile memory such as a RAM (Random Access Memory), a non-volatile memory such as a ROM (Read Only Memory), a HDD (Hard Disk Drive) having a relatively large storage capacity, and the like, for example. The RAM may function as a work area for the CPU 111, that is, a storage area to which the programs and the data are temporarily written. The ROM and the HDD may function as a storage location for the programs and the various data. Hence, in the image processing apparatus 100, the CPU 111 reads the program stored in the ROM, temporarily writes the read program into the RAM, and executes the program written in the RAM.

The network I/F 113 connects the image processing apparatus 100 to the predetermined data channel, such as the network. The external storage I/F 114 connects the image processing apparatus 100 to an external storage unit, such as a storage medium 114a. For example, the storage medium 114a may be formed by a SD (Secure Digital) memory card, a USB (Universal Serial Bus) memory, and the like. Hence, the image processing apparatus 100 may read programs and data stored in the storage medium 114a via the external storage I/F 114.

The image processing apparatus 100 having the hardware structure described above may provide image processing services (or image processing functions).

### (Operation Panel: Display Unit)

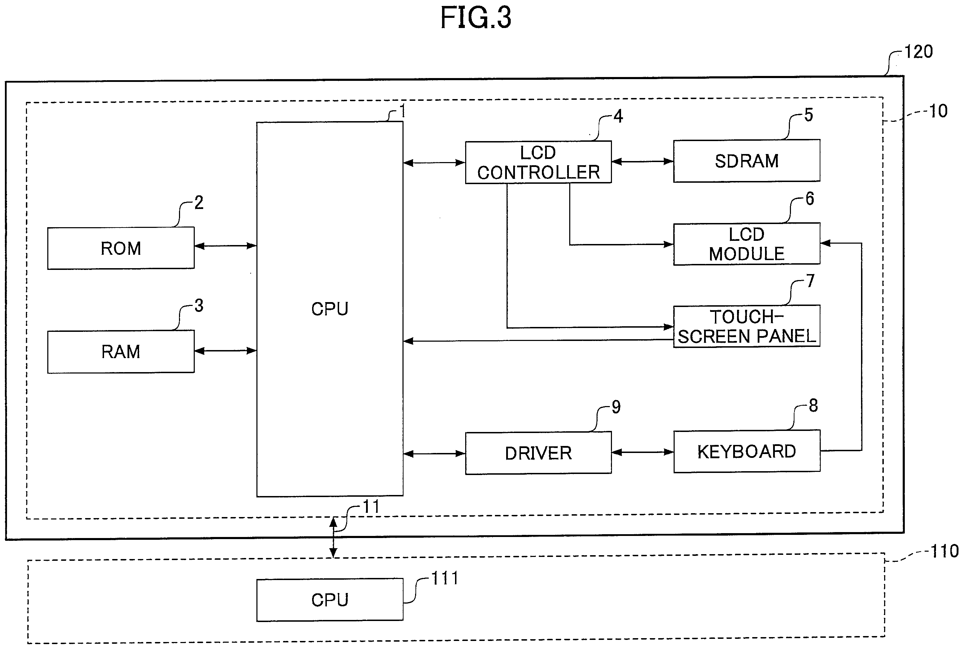

FIG. 3 is a block diagram illustrating an example of a hardware structure of the operation panel 120 in the embodiment of the present invention. As illustrated in FIG. 3, the operation panel 120 includes a control board 10, and a dedicated CPU 1, that is independent of the CPU 111 provided in the controller 110, is provided on the control board 10. The control board 10 and the controller 110 may be connected via a synchronous serial communication unit (or communication means) 11, such as a USB. For example, the communication unit 11 may enable communication of a display request from the image processing apparatus 100 and various information such as key inputs received from the operation panel 120. Hence, the operation panel 120 may display various information of the image processing apparatus 100, and the image processing apparatus 100 may perform operations based on the information input from the operation panel 120.

The CPU 1 is connected to a ROM 2, a RAM 3, a LCD (Liquid Crystal Display) controller 4, a touch-screen panel 7, and a driver 9. The ROM stores various programs related to display processes and input processes, and data related to the various programs. The RAM 3 functions as a work area for the CPU 1. The LCD controller 4 is connected to and controls a LCD module 6, and the touch-screen panel 7 is provided on a display screen of the LCD module 6. The driver 9 is connected to a keyboard 8. The CPU 1 reads the programs stored in the ROM 2, temporarily writes the read programs into the RAM 3, and executes the read programs in order to perform a hardware control described hereunder, for example.

The CPU 1 reads data from and writes data to a SDRAM (Synchronous Dynamic RAM) 5 via the LCD controller 4. The SDRAM 5 may function as a VRAM (Video RAM) to retain display pixel data to be supplied to the LCD module 6, for example. In addition, the CPU 1 performs a back light control with respect to the LCD module 6 via the LCD controller 4. Further, the CPU 1 detects operation (or pressing) of keys or switches (SW) of the keyboard 8, and performs an ON/OFF control with respect to LEDs (Light Emitting Diodes) to turn the LEDs ON or OFF.

The LCD controller 4 controls a refresh process of the SDRAM 5, and a display data transfer (or display signal output) from the SDRAM 5 to the LCD module 6. The LCD controller 4 controls the output of the display signal based on a setting to an internal register. In addition, the LCD controller 4 includes a touch-screen panel interface function to send an interrupt signal from the LCD controller 4 with respect to the CPU 1 when the touch-screen panel 7 is pressed.

The operation panel 120 having the hardware structure described above may provide information processing services including information display and information input (that is, input and output of information).

The control board 10 includes an external storage I/F (not illustrated) that is similar to the external storage I/F 114 of the controller 110. Hence, the operation panel 120 may make an access to a storage medium via the external storage I/F.

### (Application Screen Display Function)

Next, a description will be given of an application screen display function in the embodiment of the present invention.

The image processing apparatus 100 of this embodiment retains data related to screen transitions, including management information that may include a list of applications capable of making a screen transition (that is, a transitionable application list), and data related to selection buttons (or GUI (Graphical User Interface) parts) for selecting the applications of the image processing apparatus 100. The image processing apparatus 100 displays the selection button of at least one other application on the operation screen of the selected application, based on the transitionable application list, and makes a screen transition to the operation screen of the other application when the selection button on the operation screen is pressed. In this case, the image processing apparatus 100 displays on the operation screen of the selected application the selection button of at least one other application to which the screen transition may be made from the selected application, based on the transitionable application list that excludes the selected application. The image processing apparatus 100 has the application screen display function to display the operation screen of one application and the selection button of at least one other application, in the manner described above.

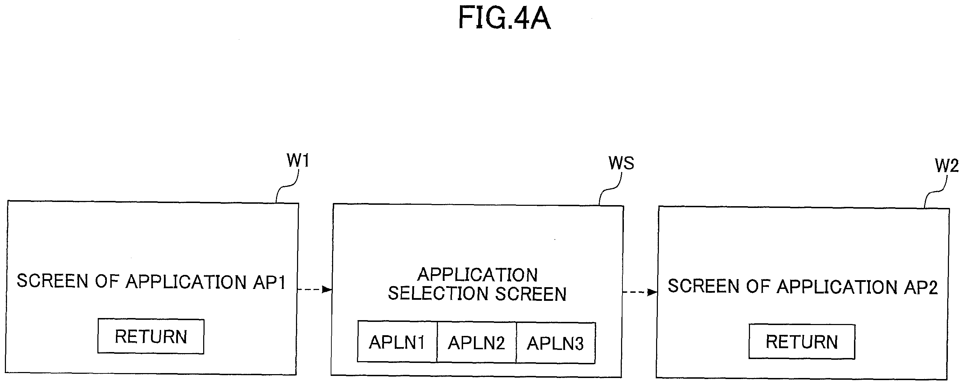

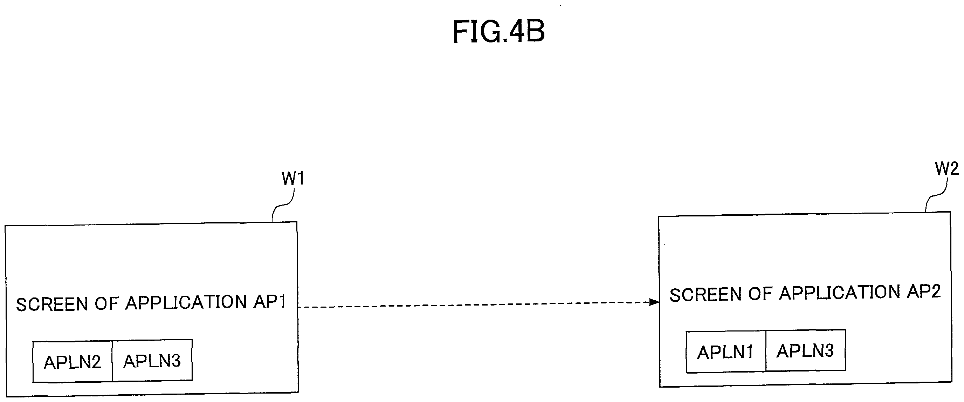

FIGS. 4A and 4B are diagrams for explaining examples of transitions of the application screens.

FIG. 4A illustrates an example of a conventional screen transition between the applications. For example, if the user wishes to use the function of an application AP2 after using the function of an application AP1, the operation screen of the application makes the following transition. First, an operation screen W1 of the application (hereinafter referred to as the "application AP1 screen") makes a transition to return to an application selection screen WS, and after selecting the application AP2, the application selection screen WS makes a transition to an operation screen W2 of the application AP2 (hereinafter referred to as the "application AP2 screen"). In other words, the screen transition is conventionally made via the application selection screen WS.

For this reason, the number of operations conventionally performed to make the screen transition from the application AP1 screen W1 to the application AP2 screen W2 is one greater than a case where the screen transition is made directly from the application AP1 screen W1 to the application AP2 screen W2. Consequently, the user must perform a large number of operations that are troublesome, if the user wishes to use a plurality of functions for a process.

On the other hand, in the image processing apparatus 100 of this embodiment, the operation screen of the application displays the selection button of at least one other application to which the screen transition may be made. When the selection button is pressed, the screen transition is made to the operation screen of the application selected by the selection button.

FIG. 4B illustrates an example a screen transition between the applications in this embodiment. For example, if the user wishes to use the function of the application AP2 after using the function of the application AP1, the operation screen of the application makes a transition from the application AP1 screen W1 directly to the application AP2 screen W2.

Accordingly, in the image processing apparatus 100 of this embodiment, the transition may be made from the operation screen of one application directly to the operation screen of another application. As a result, the number of operations required to make the screen transition from one application to another application may be reduced, and the user does not need to perform a troublesome operation to make the screen transition.

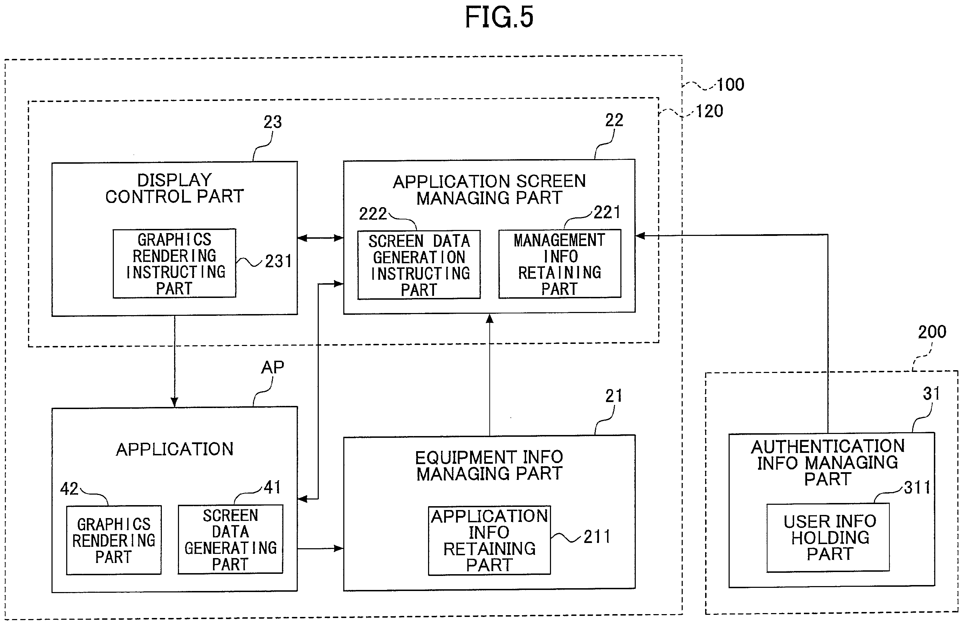

Next, a description will be given of the structure of the application screen display function, by referring to FIG. 5. FIG. 5 is a block diagram illustrating an example of a functional structure of the image processing apparatus 100 in the embodiment of the present invention.

As illustrated in FIG. 5, the image processing apparatus 100 includes an equipment information managing part 21, an application screen managing part 22, and a display control part 23. More particularly, the image processing apparatus 100 includes the equipment information managing part 21, and the operation panel 120 of the image processing apparatus 100 includes the application screen managing part 22 and the display control part 23.

The equipment information managing part 21 forms a function part to manage equipment information related to the image processing apparatus 100. For example, the equipment information includes operation state information of hardware or software of the image processing apparatus 100, install information of an application AP, and the like.

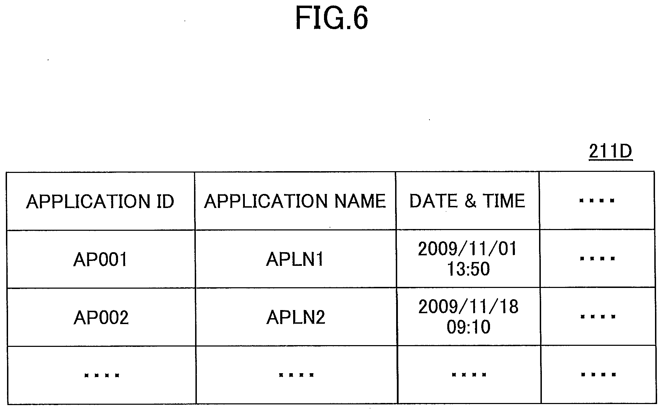

The equipment information managing part 21 retains the equipment information acquired (or notified) from the image processing apparatus 100 (and installed functions) in a predetermined storage region of the storage unit provided within the image processing apparatus 100, such as the HDD. FIG. 5 illustrates an application information retaining part 211 as one example of the function part to retain the equipment information. The application information retaining part 211 retains data illustrated in FIG. 6, for example.

FIG. 6 is a diagram illustrating an example of the data of the application information in the embodiment of the present invention. Data of application information 211D illustrated in FIG. 6 include an application ID (or application identification information) to identify the application AP, an application name (or application name information) to indicate the name of the application AP, and install information, such as a date and time (or date and time information) when the application AP is installed (or updated). Each information item forming the application information 211D is provided in correspondence with each application AP.

Returning now to the description of FIG. 5, the equipment information managing part 21 acquires information from the application AP that is a processing target, when performing an install, update or uninstall, in order to update the application information 211D in units of applications by adding, modifying or deleting the data of each information item.

In addition, the equipment information managing part 21 may provide the equipment information including the application information 211D. The equipment information managing part 21 may provide the equipment information by responding with requested information in response to an information acquisition request from other function parts such as the application screen managing part 22 that will be described later. Based on the application information 211D provided via the equipment information managing part 21, the other function parts may confirm the application AP, that is, the installed function of the image processing apparatus 100.

The application screen managing part 22 forms a function part to manage the operation screen of one or a plurality of applications AP (hereinafter referred to as an application screen W) of the image processing apparatus 100. The application screen managing part 22 acquires the application information 211D from the equipment information managing part 21, in order to confirm the one or plurality of applications AP installed in the image processing apparatus 100, and to manage the application screen W of each installed application AP.

The application screen managing part 22 retains, as management information, data related to the selection buttons (or GUI parts) to be selected by the user on the operation screen when selecting the applications AP to be used, data related to the screen transition of the application screen W, and the like, in order to manage the display operation of the application screen W and the transition operation between the applications.

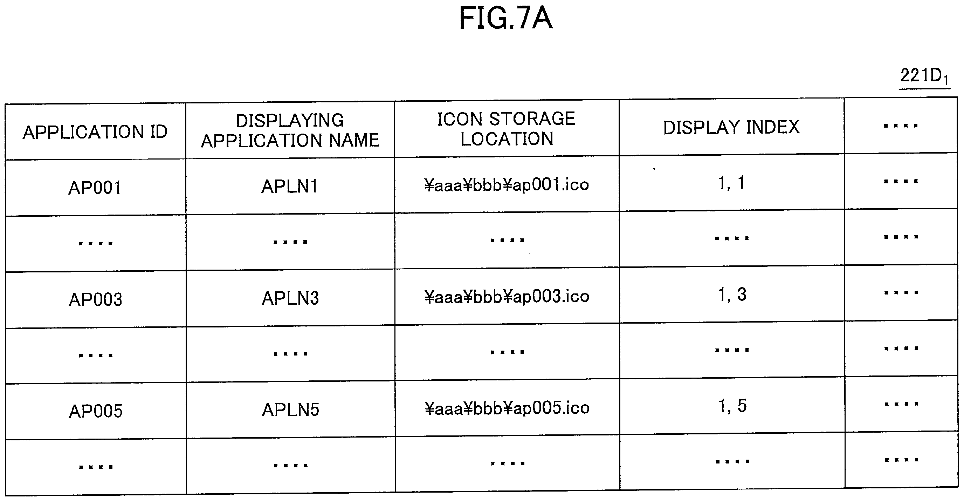

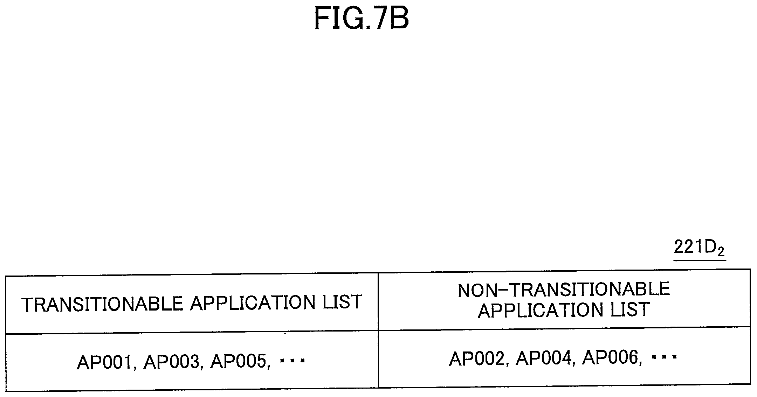

The application screen managing part 22 retains the management information in a predetermined storage region of the storage unit provided within the image processing apparatus 100, such as the HDD. FIG. 5 illustrates a management information retaining part 221 within the application screen managing part 22, as one example of the function part to retain the management information. For example, the management information retaining part 221 retains data illustrated in FIGS. 7A and 7B.

FIGS. 7A and 7B are diagrams illustrating examples of data of the management information in the embodiment of the present invention. As illustrated in FIGS. 7A and 7B, management information 221D may be categorized into two kinds of data, one being the data related to the selection buttons (or GUI parts) (hereinafter referred to as GUI part management information) illustrated in FIG. 7A, and the other being the data related to the screen transitions (hereinafter referred to as screen transition management information) illustrated in FIG. 7B.

As illustrated in FIG. 7A, the data of GUI part management information 221D₁ includes an application ID (or application identification information), and a display application name (or display application name information) indicating the application name displayed on the selection button. The data of the GUI part management information 221D₁ further includes an icon storage location (or icon storage location information) indicating a storage location of icon data corresponding to the selection button, and a display index (or relative layout position information) indicating a relative layout position of the selection button on the screen. Each information item forming the GUI part management information 221D₁ is provided in correspondence with each application AP.

Returning now to the description of FIG. 5, the application screen managing part 22 adds, modifies or deletes the data of each information item via a predetermined setting screen, in order to update the GUI part management information 221D₁ in units of applications. For example, the application screen managing part 22 adds or modifies the data of each information item, based on an input value, such as an item value of the application name or the display index, that is input from the setting screen for each information item. The information item "application ID" is updated by the item value of the application ID of the application information 211D acquired by the application screen managing part 22.

The GUI part management information 221D₁ may be updated based on setting information that is obtained by reading a file, for example. In this case, the file may be created or prepared in advance by the user. The user retains the GUI part management information 221D₁ (information item name and its item value), icon data (GUI part data), and the like corresponding to the updated application in a predetermined data format, and creates the file to be read. The image processing apparatus 100 may read such a file that is created or prepared, from a storage medium via an external storage I/F (not illustrated) provided in the operation panel 120, for example. Hence, the application screen managing part 22 may update the GUI part management information 221D₁ and install the new icon data, based on the setting information that is acquired by reading the file.

Accordingly, because the image processing apparatus 100 may acquire the data related to the selection buttons from the file, the display structure (for example, the layout of the selection buttons), the display format (for example, the coloring of the selection buttons), and the like of the application screen W may easily be customized in order to display the application screen W that is convenient and easy to use and is easily recognizable by the user.

As illustrated in FIG. 7B, the data of screen transition management information 221D₂ includes a transitionable application list (or transitionable control information) indicating the applications AP among which the screen transition may be made, a non-transitionable application list (or non-transitionable control information) indicating the applications AP among which the screen transition may not be made, and the like.

Returning now to the description of FIG. 5, the application screen managing part 22 adds, modifies or deletes the data of each information item via the predetermined setting screen, in order to update the screen transition management information 221D₂. For example, the application screen managing part 22 adds or modifies the data of each information item, based on the input value that is input from the predetermined setting screen for each information item, such as the item value of the application ID. The data of the information item to which the input value is to be allocated may be determined by the user when setting the use, purpose, function characteristic and the like of the application AP. The user may select the application AP to be allocated from the application list (that is, the list of applications installed in the image processing apparatus 100) that is displayed on the setting screen based on the application information 211D acquired by the application screen managing part 22 from the equipment information managing part 21.

In addition, the updating of the screen transition management information 221D₂ may be performed based on user information that is obtained from the authentication management apparatus 200, for example.

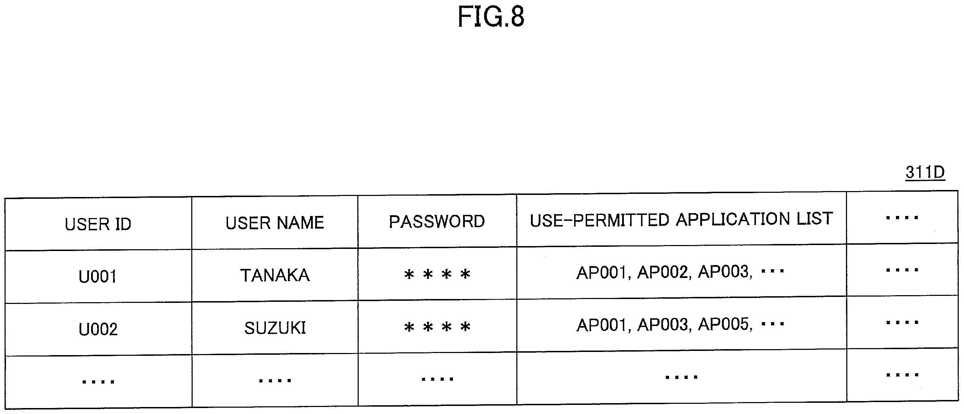

The authentication management apparatus 200 includes an authentication information managing part 31 to manage the authentication information for each user, and performs an authentication process related to the use of the image processing apparatus 100. For this reason, the authentication management apparatus 200 may retain the authentication information in a predetermined storage region of a storage unit, such as the HDD, provided in the authentication management apparatus 200. FIG. 5 illustrates an example of a function part to retain the authentication information, which is formed by a user information retaining part 311 that retains user information, such as registered information of authenticated users. The user information retaining part 311 retains data illustrated in FIG. 8, for example.

FIG. 8 is a diagram illustrating an example of the data of the user information 311D in the embodiment of the present invention. As illustrated in FIG. 8, the data of the user information 311D includes a user ID (or user identification information) to identify the user, and a user name (or user name information) indicating the name of the user. The data of the user information 311D further includes a password (or authentication collating information) to be collated (or matched) at the time of the authentication, and a list (or use-permitted application list) of applications AP whose use is permitted after the authentication . Each information item forming the user information 311D is provided in correspondence with each user.

Returning now to the description of FIG. 5, the application screen managing part 22 updates the screen transition management information 221D₂ for each user, based on the information item (or use-permitted application list) of the user information 311D. First, the application screen managing part 22 obtains, as a use permit response (or authentication result) to the use authentication, the corresponding user information 311D from the authentication information managing part 31 of the authentication management apparatus 200. The application screen managing part 22 updates the screen transition management information 221D₂ based on the item value of the use-permitted application list. The application screen managing part 22 sets the item value of the use-permitted application list, that is, the application AP whose use is permitted with respect to the authenticated user, as the item value of the transitionable application list. On the other hand, the application screen managing part 22 sets the application AP whose use is not permitted with respect to the authenticated user and is judged from the applications AP of the image processing apparatus 100, as the item value of the non-transitionable application list, based on the item value of the use-permitted application list. Hence, the application screen managing part 22 may dynamically update the screen transition management information 221D₂ based on the user information 311D obtained from the authentication management apparatus 200, when the user makes a log-in to the image processing apparatus 100. For example, FIG. 7B illustrates an example of the data of the screen transition management information 221D₂ corresponding to the user who is registered as having the user ID U002 and the user name SUZUKI in the user information 311D illustrated in FIG. 8 by the updating method described above.

Accordingly, the image processing apparatus 100 may link and cooperate with the authentication management apparatus 200 and reflect the permission condition related to the use of the functions for each user to the data related to the screen transition, in order to secure security of the installed functions by preventing unauthorized use, for example. In other words, the image processing apparatus 100 may provide with respect to the user an environment in which the screen transition is only possible among the applications whose use by the user is permitted.

When the application screen managing part 22 accepts from the application AP the selection notification on the function to be used by the user, the application screen managing part 22 transfers the management information 221D with respect to the selected application and instructs generation of the screen data, in order to manage the display operation of the application screen W. For this reason, the application screen managing part 22 includes a screen data generation instructing part 222.

The screen data generation instructing part 222 forms a function part to transfer the management information 221D (that is, the GUI part management information 221D₁ and the screen transition management information 221D₂) to the selected application, and to instruct generation of the screen data.

First, the screen data generation instructing part 222 specifies the application ID corresponding to the selected application, from the GUI part management information 221D₁, and acquires the item value of each information item corresponding to the application ID. In addition, the screen data generation instructing part 222 acquires icon data of the selection button, according to the item value of the acquired item storage location. The screen data generation instructing part 222 transfers, to the selected application, the acquired icon data and the acquired item values of the application name and the display index corresponding to the selected application.

Moreover, the screen data generation instructing part 222 deletes the item value of the application ID corresponding to the selected application, from the screen transition management information 221D₂, based on the selection notification. In other words, the image data generation instructing part 222 excludes the selected application from the applications AP that are registered in the screen transition management information 221D₂. The screen data generation instructing part 222 transfers the screen transition management information 221D₂ (the item values of the transitionable application list and the non-transitionable application list), from which the selected application is excluded, to the selected application.

Therefore, the application screen managing part 22 may display the application screen W in which the selection button of the other application AP to which the screen transition may be made, with respect to the selected application, based on the transitionable application list from which the selected application is excluded.

The image processing apparatus 100 may have a structure in which the application software is independent of (or the dependency relationship is weak) the operating environment (or platform), in order to realize extended or expanded functions, reduce the function developing time to speed up the product providing time, and reduce the developing cost or reduce the cost of product. Thus, the manufacturer of the image processing apparatus 100 provides, with respect to the software vendors (or software developers) a SDK (Software Developer Kit) for realizing the software structure described above.

Accordingly, in the image processing apparatus 100, the processes dependent on the application AP, such as the application screen data generating process and the application screen rendering process, which were conventionally performed in the image processing apparatus 100, may be performed by the application AP itself. In other words, when the application selection notification is accepted from the user via the operation panel 120, the image processing apparatus 100 of this embodiment only instructs generation of the application screen data and graphics rendering of the application screen data, with respect to the selected application, in order to manage the display operation of the application screen W.

The application AP of this embodiment thus includes a screen data generating part 41 and a graphics rendering instructing part 231.

The screen data generating part 41 forms a function part to generate the application screen data, based on each item value of the management information 221D (the transitionable application list and the non-transitionable application list) and each item value of the application name and the display index transferred from the application screen managing part 22.

First, the screen data generating part 41 specifies the application AP (screen transitionable application) to which the screen transition may be made from the selected application, based on the item value of the transitionable application list. The screen data generating part 41 generates the screen data in which the selection button of the screen transitionable application is arranged at a predetermined position (or layout position) on the application screen W, based on the icon data and each item value of the application name and the display index corresponding to the specified screen transitionable application. Data related to the detailed display format and display structure of the application screen W in the screen data may be generated based on display specifications of the application.

In addition, the screen data generating part 41 specifies the application AP (screen non-transitionable application) to which the screen transition may not be made from the selected application, based on each item value of the non-transitionable application list. The screen data generating part 41 sets the display format of the selection button for the screen non-transitionable application to a display format different from that of the selection button of the screen transitionable application, and generates the screen data in which the selection button of the screen non-transitionable application is arranged at a predetermined position (or layout position) on the application screen W. Of course, the screen data generating part 41 may generate screen data that does not display the selection button of the screen non-transitionable application on the application screen W.

The graphics rendering part 42 forms a function part to perform rendering of the screen data generated by the screen data generating part 41 on the display screen of the operation panel 120. The graphics rendering part 42 performs the rendering of the display screen based on the generated screen data, according to a graphics rendering instruction from the display control part 23 that will be described later. In a case where the screen data is generated by Flash (registered trademark) data (xx, swf, xx.flv), for example, the graphics rendering part 42 may transfer the screen data with respect to a Flash Player of the operation panel 120, and perform the rendering of the screen data on the display screen by instructing reproduction of the screen data.

The display control part 23 forms a function part to instruct the display of the application screen W with respect to the selected application. Hence, the display control part 23 includes a graphics rendering instructing part 231.

As described above, the graphics rendering instructing part 231 forms the function part to instruct rendering of the screen data, with respect to the graphics rendering part 42 of the application AP. The graphics rendering instructing part 231 instructs the rendering of the screen data according to a display instruction form the application screen managing part 22.

Hence, in the image processing apparatus 100 of this embodiment, the application screen managing part 22 links to and cooperates with the application AP and the display control part 23, and manages the display of the application screen W in the following manner. When the selection button of the screen transitionable application is displayed on the application screen W based on the transitionable application list, and the selection button is pressed, the screen transition is made to the application screen W of the selected application. In this case, the image processing apparatus 100 displays the selection button of the screen transitionable application on the application screen W of the selected application, based on the transitionable application list from which the selected application is excluded.

Therefore, the application screen display function of this embodiment may be realized by the operations of the function parts which link and cooperate in the manner described above.

Next, a more detailed description will be given of the operation of the application screen display function, namely, the linked operation of the function part group, by referring to sequence diagrams illustrating the processing procedure.

The application screen display function may be realized when the program (software part realizing the application screen display function) to be installed in the operation panel 120 is read by the CPU 1 from a storage location (for example, the ROM 2) and written into the RAM 3, and the following processes are executed.

The processing procedure of the application screen display function may be roughly categorized into a management information registering and updating process (or initial process) and an application screen display process. Hence, these two processes will be described in this order.

### (Initial Process)

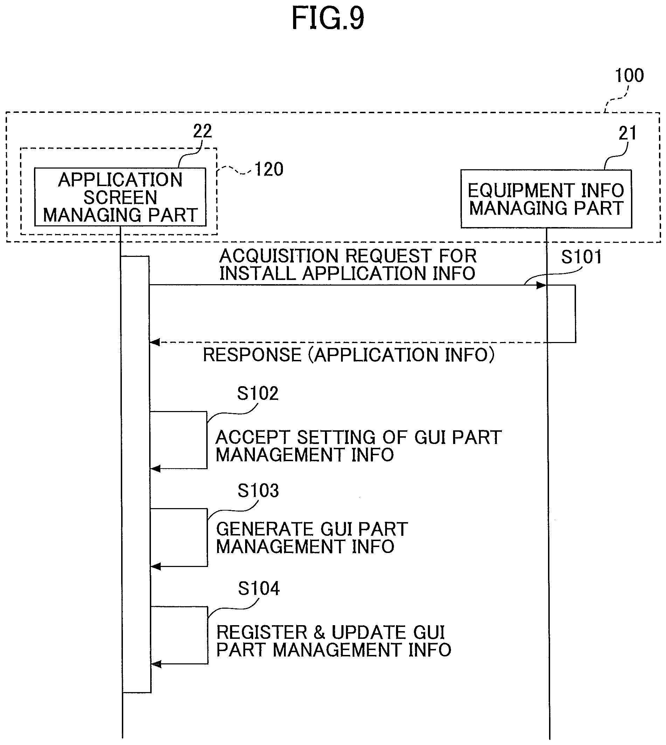

FIG. 9 is a sequence diagram illustrating an example of a processing procedure to register and update the management information 311D of the display screen in the embodiment of the present invention.

As illustrated in FIG. 9, the application screen managing part 22 of the operation panel 120 provided in the image processing apparatus 100 makes an acquisition request for the install application information with respect to the equipment information managing part 21, in a step S101. As a result, the equipment information managing part 21 sends a response, including the application information 211D retained in the application information retaining part 211, to the application screen managing part 22 at the request source.

Then, the application screen managing part 22 accepts the setting of the GUI part management information 221D₁ via the predetermined setting screen, in a step S102. For example, the application screen managing part 22 reads the setting file from the storage medium that is connected to the external storage I/F of the operation panel, based on the storage location information (or file path) of the setting file specified by the setting screen. Thus, the application screen managing part 22 accepts the setting value corresponding to each information item of the GUI part management information 221D₁. The GUI part management information 221D₁ may be accepted as the setting value corresponding to each information item, by accepting the input value from the setting screen.

Next, the application screen managing part 22 generates the GUI part management information 221D₁, based on the acquired application information 211D and the setting value, in a step S103. The application screen managing part 22 confirms the installed or uninstalled application, based on the application information 211D, and performs an add, update or delete operation with respect to the GUI part management information 221D₁, for each application AP of the image processing apparatus 100. Hence, the application screen managing part 22 may generate the GUI part management information 221D₁ in units of applications, in which the application ID of the application AP specified of the setting is made to correspond to the setting value of each information value.

Thereafter, the application screen managing part 22 registers the generated information in the management information retaining part 221, and updates the GUI part management information 221D₁, in a step S104. The application screen managing part 22 stores the setting value of each information item corresponding to the application ID, as the item value, in the management information retaining part 221 (that is, the predetermined storage region) that retains the GUI part management information 221D₁. In this state, the application screen managing part 22 stores the icon data of the selection button, and the like in the management information retaining part 221. In a case where the data management method of the storage region employs a file system, the storage location (or storage destination) of the icon data may be a directory specified in the GUI part management information 221D₁ as the icon storage location.

Accordingly, the image processing apparatus 100 may set and register in advance the display format and the display structure of the selection button of the screen transitionable application to be displayed on the application screen W, and the GUI part data (or icon data).

### (Application Screen Display Process: Initial Screen Display)

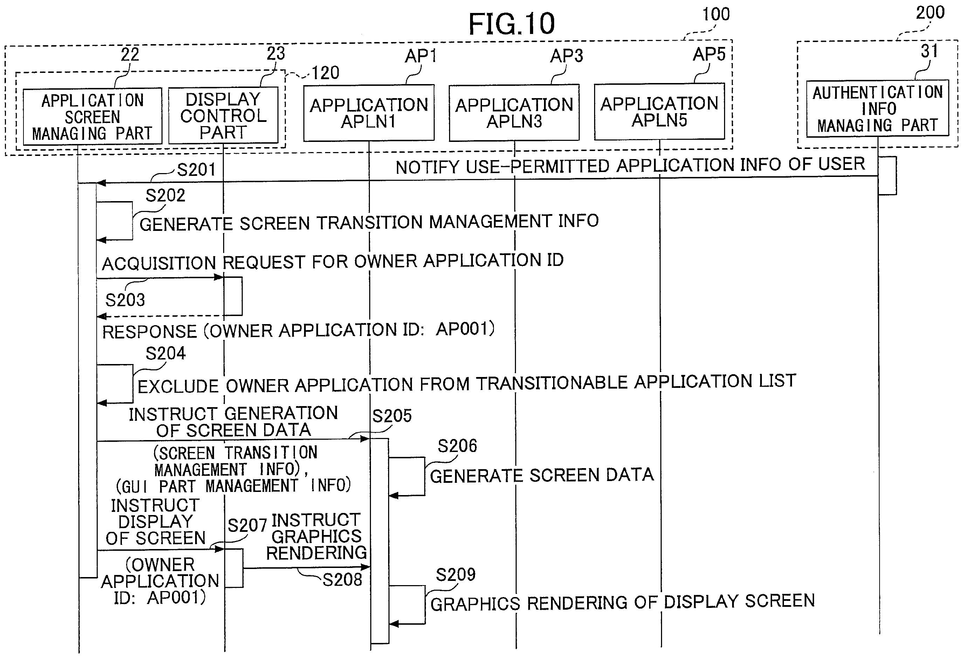

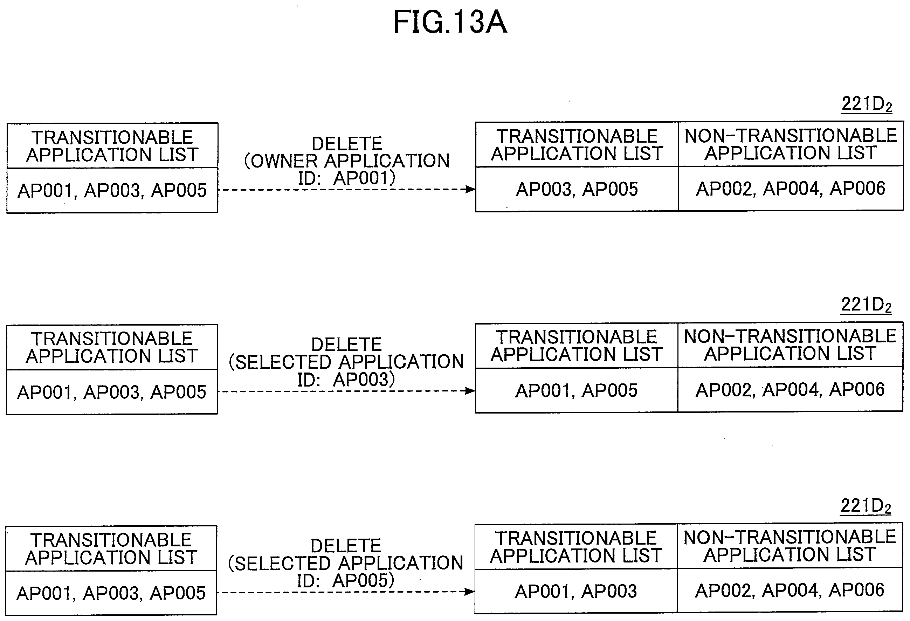

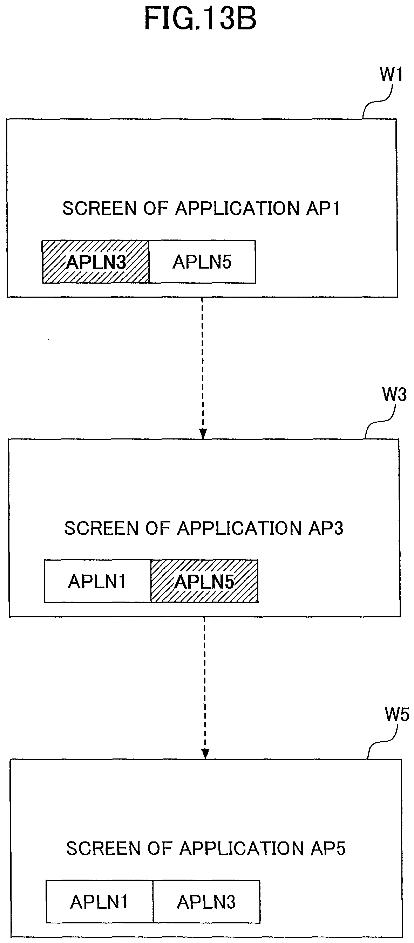

FIG. 10 is a sequence diagram illustrating an example of a processing procedure to display the application screen W in this embodiment. In addition, FIGS. 13A and 13B are diagrams illustrating examples of the transition of the application screen W in the embodiment of the present invention.

FIG. 10 illustrates an example of the processing procedure in which the user makes a log-in to the image processing apparatus 100 and the initial screen, such as an application screen having a relatively high frequency of use (that is, the rate of use is relatively high), is displayed. In this example of the processing sequence described hereunder, the following conditions are assumed. First, applications AP1 through AP6 (or APN, where N = 1, 2, ...) having the application names APLN1 through APLN6 are installed in the image processing apparatus 100. In addition, the application AP1 (hereinafter also referred to as an owner application AP1) is allocated for the application AP having the relatively high frequency of use, and the screen transition may be made from the owner application AP1 to each of the applications AP3 and AP5.

The image processing apparatus 100 is notified of the user authentication result (or use permission authentication) from the authentication information managing part 31 of the authentication management apparatus 200, together with the use-permitted application information of the user, in a step S201. In this state, the authentication information managing part 31 transfers the use-permitted application list of the user with respect to the application screen managing part 22 of the operation panel 120, based on the user information 311D of the authenticated user retained in the user information retaining part 311.

Based on the acquired use-permitted application list, the application screen managing part 22 generates the screen transition management information 221D₂, in a step S202. The application screen managing part 22 sets the application ID within the use-permitted application list as the item value of the transitionable application list of the screen transition management information 221D₂. In addition, the application screen managing part 22 sets the application ID of the previously acquired application information 211D, not included in the use-permitted application list, as the item value of the non-transitionable application list. The screen transition management information 221D₂ that is generated in this manner is retained in the management information retaining part 221.

Next, the application screen managing part 22 makes an acquisition request for the identification information (or application ID) of the owner application AP1 (that is, the application of the initial screen), with respect to the display control part 23 of the operation panel 120, in a step 203. As a result, the display control part 23 makes a response, including the preset application ID AP001 of the owner application AP1, to the application screen managing part 22 at the request source.

In addition, the application screen managing part 22 excludes the owner application AP1 from the transitionable application list of the generated screen transition management information 221D₂, in a step S204. An upper portion of FIG. 13A illustrates an example of the data operation in this state. First, the application screen managing part 22 copies the screen transition management information 221D₂ retained in the management information retaining part 221 in the memory (for example, the RAM 3). Then, the application screen managing part 22 deletes the application ID AP001 corresponding to the owner application AP1 from the transitionable application list of the application IDs AP001, AP003, and AP005 in the copied screen transition management information 221D₂, and updates the transitionable application list to include the application IDs AP003 and AP005 and not the application ID AP001.

Next, the application screen managing part 22 instructs, by the screen data generation instructing part 222, the generation of the application screen data with respect to the owner application AP1 installed in the image processing apparatus 100, in a step S205. The screen data generation instructing part 222 transfers to the screen data generating part 41 of the owner application AP1 the item value of the updated screen transition management information 221D₂ (such as the transitionable application list and the non-transitionable application list) and the item value of the GUI part management information 221D1 retained in the management information retaining part 221 (such as the application name and the display index of the non-transitionable application). Hence, the application screen managing part 22 instructs the generation of the application screen data with respect to the owner application AP1.

The owner application AP1 generates the application screen data by the screen data generating part 41 based on each item value of the received management information 221D, in a step S206. The screen data generating part 41 first specifies the screen transitionable application (the applications AP3 and AP5 in this example), based on the item values of the transitionable application list of the application IDs AP003 and AP005 in the screen transition management information 221D₂. Then, the screen data generating part 41 generates the screen data in which the selection buttons of the applications AP3 and AP5 are arranged at predetermined positions on the application screen of the application AP1, from each item value of the application names APLN1 and APLN3 and the display indexes 1, 3 and 1, 5 corresponding to the specified screen transitionable application and the icon data (ap003.ico, ap005.ico). Further, the screen data generating part 41 specifies the screen non-transitionable applications AP4, AP5, and AP6 based on each item value of the non-transitionable application list of the application IDs AP002, AP004, and AP006, and generates the screen data that does not display the selection buttons of the applications AP2, AP4, and AP6.

After instructing the generation of the screen data, the application screen managing part 22 instructs the display of the application AP1 screen W1 (that is, the operation screen of the owner application) with respect to the display control part 23 of the operation panel 120, in a step S207. In this state, the application screen managing part 22 transfers and instructs the display of the application ID AP001 of the owner application AP1 with respect to the display control part 23.

The display control part 23 instructs the graphics rendering of the screen data from the graphics rendering instructing part 231 with respect to the graphics rendering part 42 of the owner application AP1, according to the display instruction (or based on the transferred application ID), in a step S208.

The owner application AP1 performs the graphics rendering of the generated screen data on the display screen of the operation panel 120 by the graphics rendering part 42, according to the graphics rendering instruction from the display control part 23, in a step S209. An upper portion of FIG. 13B illustrates an example of the display screen that is obtained by the graphics rendering in this state. In FIG. 13B, the application AP1 screen W1 includes the selection buttons of the applications AP3 and AP5, having the application names APLN3 and APLN5, to which the screen transition may be made from the application AP1. The selection buttons are displayed at predetermined positions on the application AP1 screen W1 in a superimposed or overlapping manner. Hence, the image processing apparatus 100 may provide, with respect to the authenticated user, an environment in which the use-permitted applications AP3 and AP5 for the authenticated user are selectable without having to use the application selection screen SW. For example, the screen transition may be made to the application AP3 screen W3 by pressing the selection button of the application AP3 indicated by the hatching in the upper portion of FIG. 13B.

### (Application Screen Display Process: Display of Selected Application Screen (Application AP3 Screen) After Screen Transition)

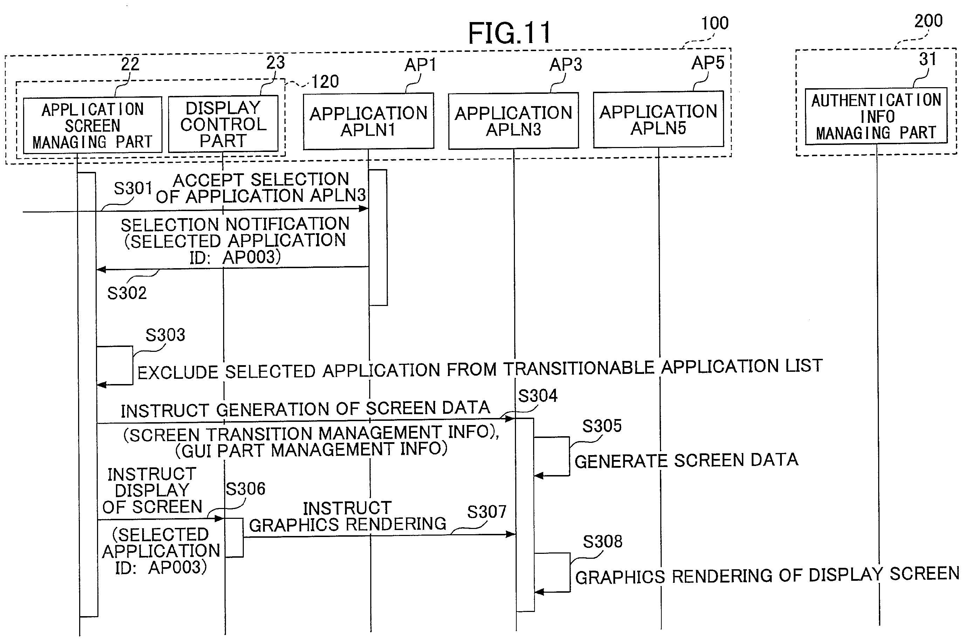

FIG. 11 is a sequence diagram illustrating an example of the processing procedure to display the application screen for a case where the authenticated user uses the function of the application AP3 after using the function of the owner application AP1, and the operation screen makes a transition from the application AP1 screen W1 to the application AP3 screen W3. In the processing procedure illustrated in FIG. 11, the conditions that are assumed are the same as those assumed for the processing procedure illustrated in FIG. 10.

The image processing apparatus 100 accepts the selection instruction (for example, the pressing of the selection button of the application AP3) of the using function (for example, the application AP3) from the user, via the application AP1 screen W1, in a step S301. As a result, the owner application AP1 notifies the selection of the application AP3 with respect to the application screen managing part 22 of the operation panel 120, in a step S302. In this state, the owner application AP1 transfers the identification information, namely, the application ID AP003, of the selected application AP3 with respect to the application screen managing part 22.

The application screen managing part 22 excludes the selected application AP3 from the transitionable application list of the generated screen transition management information 221D₂, in a step S303. A middle portion of FIG. 13A illustrates an example of the data operation in this state. The application screen managing part 22 deletes the application ID AP003 corresponding to the selected application AP3, from the transitionable application list including the application IDs AP001, AP003, and AP005 of the screen transition management information 221D₂ that is copied in the memory, and updates the transitionable application list to include the application IDs AP001 and AP005.

Next, the application screen managing part 22 instructs, by the screen data generation instructing part 222, the generation of the application screen data with respect to the selected application AP3 of the image processing apparatus 100, in a step S304. The screen data generation instructing part 222 transfers the item value of the updated screen transition management information 221D₂ (the transitionable application list and the non-transitionable application list) and the item value of the GUI part management information 221D₁ retained in the management information retaining part 221 (the application name and the display index of the non-transitionable application), to the screen data generating part 41 of the selected application AP3. Hence, the application screen managing part 22 instructs the generation of the application screen data with respect to the selected application AP3.

The selected application AP3 generates, by the screen data generating part 41, the application screen data based on each item value of the received management information 221D, in a step S305. The screen data generating part 41 first specifies the screen transitionable applications (the applications AP1 and AP5 in this example), based on the item values of the transitionable application list including the application IDs AP001 and AP005 in the screen transition management information 221D₂. Then, the screen data generating part 41 generates the screen data in which the selection buttons of the applications AP1 and AP5 are arranged at predetermined positions on the application screen of the application AP3, from each item value of the application names APLN1 and APLN3 and the display indexes 1, 1 and 1, 5 corresponding to the specified screen transitionable application and the icon data (ap001.ico, ap005.ico).

After instructing the generation of the screen data, the application screen managing part 22 instructs the display of the application AP3 screen W3 (that is, the operation screen of the selected application) with respect to the display control part 23 of the operation panel 120, in a step S306. In this state, the application screen managing part 22 transfers and instructs the display of the application ID AP003 of the selected application AP3 with respect to the display control part 23.

The display control part 23 instructs the graphics rendering of the screen data from the graphics rendering instructing part 231 with respect to the graphics rendering part 42 of the selected application AP3, according to the display instruction (or based on the transferred application ID), in a step S307.

The selected application AP3 performs the graphics rendering of the generated screen data on the display screen of the operation panel 120 by the graphics rendering part 42, according to the graphics rendering instruction from the display control part 23, in a step S308. A middle portion of FIG. 13B illustrates an example of the display screen that is obtained by the graphics rendering in this state. In FIG. 13B, the application AP3 screen W3 includes the selection buttons of the applications AP1 and AP5, having the application names APLN1 and APLN5, to which the screen transition may be made from the application AP3. The selection buttons are displayed at predetermined positions on the application AP3 screen W3 in a superimposed or overlapping manner. Hence, the image processing apparatus 100 may provide, with respect to the authenticated user, an environment in which the use-permitted applications AP1 and AP5 for the authenticated user are selectable without having to use the application selection screen SW. For example, the screen transition may be made to the application AP5 screen W5 by pressing the selection button of the application AP5 indicated by the hatching in the middle portion of FIG. 13B.

### (Application Screen Display Process: Display of Selected Application Screen (Application AP5 Screen) After Screen Transition)

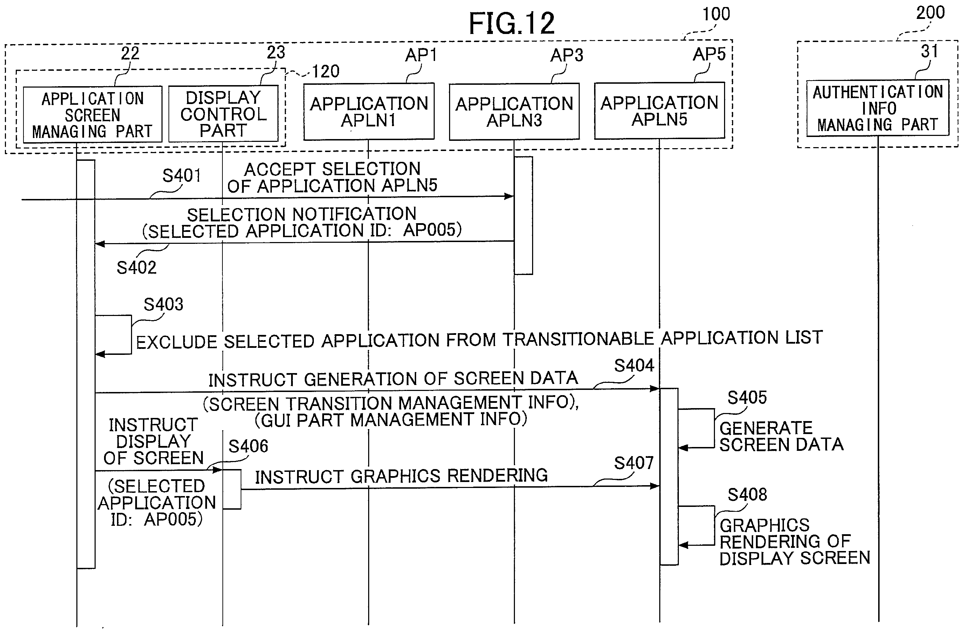

FIG. 12 is a sequence diagram illustrating an example of the processing procedure to display the application screen for a case where the authenticated user uses the function of the application AP5 after using the function of the application AP3, and the operation screen makes a transition from the application AP3 screen W3 to the application AP5 screen W5. In the processing procedure illustrated in FIG. 12, the conditions that are assumed are the same as those assumed for the processing procedure illustrated in FIG. 10.

Steps S401 through S408 illustrated in FIG. 12 are the same as the steps S301 through S308 illustrated in FIG. 11, and a detailed description thereof will be omitted. A brief description will only be given with respect to the steps S403 and S408.

A lower portion of FIG. 13A illustrates an example of the data operation in the step S403. The application screen managing part 22 deletes the application ID AP005 corresponding to the selected application AP5, from the transitionable application list including the application IDs AP001, AP003, and AP005 of the screen transition management information 221D₂ that is copied in the memory, and updates the transitionable application list to include the application IDs AP001 and AP003.

A lower portion of FIG. 13B illustrates an example of the display screen that is obtained by the graphics rendering in the step S408. In FIG. 13B, the application AP5 screen W5 includes the selection buttons of the applications AP1 and AP3, having the application names APLN1 and APLN3, to which the screen transition may be made from the application AP5. The selection buttons are displayed at predetermined positions on the application AP5 screen W5 in a superimposed or overlapping manner. Hence, the image processing apparatus 100 may provide, with respect to the authenticated user, an environment in which the use-permitted applications AP1 and AP3 for the authenticated user are selectable without having to use the application selection screen SW. For example, the screen transition may be made to the application AP1 screen W1 by pressing the selection button of the application AP1 indicated by the hatching in the lower portion of FIG. 13B.

### (Features)

Therefore, according to the image processing apparatus 100 of the above described embodiment, the application screen managing part 22 of the operation panel 120 retains, as the management information 221D, the screen transition management information 221D₂ including the list of screen transitionable applications (or transitionable application list) and the GUI part management information 221D₁ for selecting the application AP of the image processing apparatus 100.

In the image processing apparatus 100, the application screen managing part 22 displays the selection buttons of the screen transitionable applications on the application screen W, based on the transitionable application list. If the selection button is pressed, the screen transition is made to the application screen W of the selected application corresponding to the pressed selection button. In this state, the application screen managing part 22 of the image processing apparatus 100 displays the selection buttons of the screen transitionable applications on the application screen W of the selected application, based on the transitionable application list from which the selected application is excluded.

For this reason, the image processing apparatus 100 may make a transition from one application screen W directly to an application screen W of a different application AP. As a result, the number of operations that need to be performed when making the screen transition between the applications may be reduced, to thereby reduce the load on the user to perform the troublesome operation on the operation screen to make the screen transition.

The application screen display function of the image processing apparatus 100 may be realized by a program that is written in a programming language suited for the operating environment (or platform) to perform each processing procedure described above in conjunction with the drawings, and causes the CPU 111 of the image processing apparatus 100 and the CPU 1 of the operation panel 120 to execute each processing procedure.

The program may be stored in a suitable non-transitory or tangible computer-readable storage medium, such as the storage medium 114a illustrated in FIG. 2, for example. The storage medium 114 may be formed by a SD (Secure Digital) memory card, a USB (Universal Serial Bus) memory, and the like.

The program stored in the computer-readable storage medium may be installed in the image processing apparatus 100 and/or the operation panel 120 via an external storage interface that is configured to read the storage medium, such as the external storage I/F 114 illustrated in FIG. 2, for example. In addition, because the image processing apparatus 100 is provided with the network I/F 113, the program may be downloaded and installed into the image processing apparatus 100 using an electrical communication line such as the Internet.

In the described embodiment, the authentication management apparatus 200 includes the user information 311D of registered authenticated users. For example, in a case where the user information 311D includes an information item, such as a priority application, to indicate the application AP having a high frequency of use for each user, the application screen managing part 22 may carry out the process of determining the owner application in the step S203 illustrated in FIG. 10 in the following manner. That is, instead of acquiring the application ID of the owner application from the display control part 23, the application screen managing part 22 may acquire the application ID of the owner application from the priority application of the user information 311D that is acquired from the authentication management apparatus 200. In this case, the image processing apparatus 100 may display, as an initial screen after the log-in, the application screen W of the application AP depending on the frequency of use by the authenticated user.

Moreover, although the use permission authentication function is performed by the information processing apparatus (that is, the authentication management apparatus 200) which is different from the image processing apparatus 100, the apparatus that performs the use permission authentication function is not limited to such an apparatus. For example, the image processing apparatus 100 itself may form the authentication information managing part and perform the use permission authentication function.

## Claims

1. An image processing apparatus (100) installable with a plurality of applications to realize installed functions, comprising:
a processing unit configured to control the image processing apparatus;
display means (6) for displaying operation screens of the plurality of applications;
retaining means (112) for retaining a transitionable application list that includes information related to applications between which a screen transition is possible amongst the plurality of applications, and a screen part to select a screen transition to an operation screen of another application on the operation screen of the application, wherein a screen transition is a direct transition from an operation screen of an application to an operation screen of another application;
specifying means for specifying the screen part to be displayed on the display means (6) based on the transitionable application list;
display control means (110) for controlling the display means to display, in a superimposed or overlapping manner, the operation screen of the application and the screen part specified by the specifying means in order to select the screen transition to the operation screen of the other application,
**characterized in that**
the specifying means specifies the screen part corresponding to all of the plurality of the applications in the transitionable application list but excluding, from the transitionable application list, the application corresponding to the operation screen displayed on the display means under the control of the display control means,
wherein the display control means generates the transitionable application list based on application identification information of a use-permitted application list that includes applications permitted for use by a user, and excludes the application whose operation screen is displayed from the transitionable application list by deleting the application identification information of the selected application from the generated transitionable application list.

2. The image processing apparatus (100) as claimed in claim 1, wherein the display control means includes:
an instructing part configured to instruct generation of operation screen data of an application,
wherein the instructing part instructs the generation of the operation screen data by transferring, to the selected application, data related to the screen transition and including the transitionable application list excluding the selected application, and data related to the GUI parts of the other applications.

3. The image processing apparatus (100) as claimed in claim 2, wherein each of the plurality of applications includes:
a generating part configured to generate operation screen data; and
a graphics rendering part configured to perform graphics rendering of the operation screen data,
wherein the generating part generates the operation screen data based on the data related to the screen transition and the data related to the GUI parts transferred according to an instruction to generate the operation screen data received from the managing part, and
the graphics rendering part performs the graphics rendering of the generated operation screen data on a display screen of the display unit.

4. The image processing apparatus (100) as claimed in any of claims 1 to 3, wherein there is further provided:
a storage unit configured to store the plurality of applications.

5. An authentication system (1000) comprising:
the image processing apparatus (100) according to claim 1; and
an authentication management apparatus (200), coupled to the image processing apparatus (100) via a predetermined data channel (N), and configured to manage equipment use restrictions of users based on user authentication received from the image processing apparatus (100),
wherein the authentication management apparatus comprises:
a control unit configured to send a response, including a use-permitted application list that includes applications permitted for use by an authenticated user, in response to a user authentication request from the image processing apparatus.

6. The authentication system (1000) as claimed in claim 5, wherein the display control means excludes the application whose operation screen is displayed from the transitionable application list by deleting the application identification information of the application whose operation screen is displayed from the generated transitionable application list.

7. The authentication system (1000) as claimed in claim 5 or 6, wherein the display control part includes:
an instructing part configured to instruct generation of operation screen data of an application,
wherein the instructing part instructs the generation of the operation screen data by transferring, to the selected application, data related to the screen transition and including the transitionable application list excluding the selected application, and data related to the GUI parts of the other applications.

8. The authentication system (1000) as claimed in claim 7, wherein each of the plurality of applications includes:
a generating part configured to generate operation screen data; and
a graphics rendering part configured to perform graphics rendering of the operation screen data,
wherein the generating part generates the operation screen data based on the data related to the screen transition and the data related to the GUI parts transferred according to an instruction to generate the operation screen data received from the managing part, and
the graphics rendering part performs the graphics rendering of the generated operation screen data on a display screen of the display unit.

9. The authentication system (1000) as claimed in any of claims 5 to 8, wherein the image processing apparatus further comprises:
a storage unit configured to store the plurality of applications.

10. A computer-readable storage medium which stores a program which, when executed by a computer, causes the computer to perform a process of an image processing apparatus (100) that is installable with a plurality of applications to realize installed functions and includes display means for displaying operation screens of the plurality of applications, wherein said process comprises:
a retaining procedure causing the computer to retain a transitionable application list that includes information related to applications between which a screen transition is possible amongst the plurality of applications, and a screen part to select an application on the operation screen of another application on the operation screen of the application, wherein a screen transition is a direct transition from an operation screen of an application to an operation screen of another application;
a specifying procedure for specifying the screen part to be displayed in the display means based on the transitionable application list;
a display control procedure for controlling the display means to display, in a superimposed or overlapping manner, the operation screen of the application and the screen parts specified by the specifying procedure in order to select the screen transition to the operation screen of the other application,
**characterized in that** the specifying procedure specifies the screen part corresponding to all of the plurality of the applications in the transitionable application list but excluding, from the transitionable application list, the application corresponding to the operation screen displayed on the display means under control of the display control procedure,
wherein the display control procedure causes the computer to generate the transitionable application list based on application identification information of a use-permitted application list that includes applications permitted for use by a user, and exclude the application whose operation screen is displayed from the transitionable application list by deleting the application identification information of the selected application from the generated transitionable application list.

11. The computer-readable storage medium as claimed in claim 10, wherein the procedure includes:
an instructing procedure causing the computer to instruct generation of operation screen data of an application,
wherein the instructing procedure causes the computer to instruct the generation of the operation screen data by transferring, to the application whose operation screen is displayed, data related to the screen transition and including the transitionable application list excluding the selected application, and data related to the GUI parts of the other applications.

12. The computer-readable storage medium as claimed in claim 11, wherein each of the plurality of applications includes:
a generating part configured to generate operation screen data; and
a graphics rendering part configured to perform graphics rendering of the operation screen data,
wherein the generating part generates the operation screen data based on the data related to the screen transition and the data related to the GUI parts transferred according to an instruction to generate the operation screen data received from the managing part, and
the graphics rendering part performs the graphics rendering of the generated operation screen data on a display screen of the display unit.

13. The computer-readable storage medium as claimed in any of claims 10 to 12, wherein the image processing apparatus further includes a processing unit,
**characterized in that**:
the retaining procedure is executed by a computer of the display unit; and
the display control procedure is executed by a computer of the processing unit.

## Patentansprüche

1. Bildverarbeitungsvorrichtung (100), die mit einer Vielzahl von Anwendungen installiert werden kann, um installierte Funktionen auszuführen, umfassend:
eine Verarbeitungseinheit, die konfiguriert ist, die Bildverarbeitungsvorrichtung zu steuern;
Anzeigemittel (6), um Betriebsbildschirme der Vielzahl von Anwendungen anzuzeigen;
ein Aufbewahrungsmittel (112) zum Aufbewahren einer Übergangsanwendungsliste, die Informationen in Bezug zu Anwendungen enthält, zwischen denen ein Bildschirmübergang unter der Vielzahl von Anwendungen möglich ist, und eines Bildschirmteils, um einen Bildschirmübergang zu einem Betriebsbildschirm einer anderen Anwendung auf dem Betriebsbildschirm der Anwendung auszuwählen, wobei ein Bildschirmübergang ein direkter Übergang von einem Betriebsbildschirm einer Anwendung zu einem Betriebsbildschirm einer anderen Anwendung ist;
Spezifizierungsmittel, um festzulegen, dass der Bildschirmteil auf den Anzeigemitteln (6) basierend auf der Übergangsanwendungsliste angezeigt wird;
Anzeigesteuermittel (110), um die Anzeigemittel so zu steuern, dass sie den Betriebsbildschirm der Anwendung und den Bildschirmteil, der durch die Spezifizierungsmittel festgelegt ist, auf eine überlagernde oder überdeckende Weise anzeigen, um den Bildschirmübergang zu dem Betriebsbildschirm der anderen Anwendung auszuwählen,
**dadurch gekennzeichnet, dass**
die Spezifizierungsmittel den Bildschirmteil festlegen, der der gesamten Vielzahl der Anwendungen in der Übergangsanwendungsliste entspricht, jedoch die Anwendung, die dem Betriebsbildschirm entspricht, der auf den Anzeigemitteln angezeigt wird, unter Steuerung der Anzeigesteuermittel von der Übergangsanwendungsliste ausschließt,
wobei die Anzeigesteuermittel die Übergangsanwendungsliste basierend auf Anwendungsidentifizierungsinformation einer zur Verwendung zugelassenen Anwendungsliste erzeugen, die Anwendungen enthält, die für die Verwendung durch einen Benutzer zugelassen sind, und die Anwendung ausschließt, deren Betriebsbildschirm von der Übergangsanwendungsliste angezeigt wird, indem sie die Anwendungsidentifizierungsinformation der ausgewählten Anwendung aus der erzeugten Übergangsanwendungsliste löscht.

2. Bildverarbeitungsvorrichtung (100) nach Anspruch 1, wobei die Anzeigesteuermittel Folgendes umfassen:
einen Anweisungsteil, der konfiguriert ist, eine Erzeugung von Betriebsbildschirmdaten einer Anwendung anzuweisen,
wobei der Anweisungsteil die Erzeugung der Betriebsbildschirmdaten anweist, indem Daten in Verbindung mit dem Bildschirmübergang einschließlich der Übergangsanwendungsliste, die die ausgewählte Anwendung ausschließt, und Daten in Verbindung mit den GUI-Teilen der anderen Anwendungen zu der ausgewählten Anwendung übertragen werden.

3. Bildverarbeitungsvorrichtung (100) nach Anspruch 2, wobei jede der Vielzahl von Anwendungen Folgendes enthält:
einen Erzeugungsteil, der konfiguriert ist, Betriebsbildschirmdaten zu erzeugen; und
einen Grafikwiedergabeteil, der konfiguriert ist, eine Grafikwiedergabe der Betriebsbildschirmdaten durchzuführen,
wobei der Erzeugungsteil die Betriebsbildschirmdaten basierend auf den Daten in Verbindung mit dem Bildschirmübergang und den Daten in Verbindung mit den GUI-Teilen erzeugt, die entsprechend einer Anweisung übertragen werden, die von dem Verwaltungsteil empfangenen Betriebsbildschirmdaten zu erzeugen, und
der Graphikwiedergabeteil die Graphikwiedergabe der erzeugten Betriebsbildschirmdaten auf einem Anzeigebildschirm der Anzeigeeinheit durchführt.

4. Bildverarbeitungsvorrichtung (100) nach einem der Ansprüche 1 bis 3, wobei ferner Folgendes bereitgestellt ist:
eine Speichereinheit, die konfiguriert ist, die Vielzahl von Anwendungen zu speichern.

5. Authentifizierungssystem (1000), umfassend:
die Bildverarbeitungsvorrichtung (100) nach Anspruch 1; und
eine Authentifizierungsverwaltungsvorrichtung (200), die über einen vorbestimmten Datenkanal (N) mit der Bildverarbeitungsvorrichtung (100) verbunden und konfiguriert ist, Ausstattungsverwendungsbeschränkungen von Benutzern basierend auf der Benutzerauthentifizierung zu verwalten, die von der Bildverarbeitungsvorrichtung (100) empfangen wurde,
wobei die Authentifizierungsverwaltungsvorrichtung Folgendes umfasst:
eine Steuereinheit, die konfiguriert ist, eine Antwort zu senden, einschließlich einer zur Verwendung zugelassenen Anwendungsliste, die Anwendungen enthält, die für die Verwendung durch einen authentifizierten Benutzer zugelassen sind, als Antwort auf eine Benutzerauthentifizierungsanfrage der Bildverarbeitungsvorrichtung.

6. Authentifizierungssystem (1000) nach Anspruch 5, wobei die Anzeigesteuermittel die Anwendung ausschließen, deren Betriebsbildschirm von der Übergangsanwendungsliste angezeigt wird, indem die Anwendungsidentifizierungsinformation der Anwendung gelöscht wird, deren Betriebsbildschirm von der erzeugten Übergangsanwendungsliste angezeigt wird.

7. Authentifizierungssystem (1000) nach Anspruch 5 oder 6, wobei der Anzeigesteuerteil Folgendes umfasst:
einen Anweisungsteil, der konfiguriert ist, die Erzeugung von Betriebsbildschirmdaten einer Anwendung anzuweisen,
wobei der Anweisungsteil die Erzeugung der Betriebsbildschirmdaten anweist, indem Daten in Verbindung mit dem Bildschirmübergang einschließlich der Übergangsanwendungsliste, die die ausgewählte Anwendung ausschließt, und Daten in Verbindung mit den GUI-Teilen der anderen Anwendungen zu der ausgewählten Anwendung übertragen werden.

8. Authentifizierungssystem (1000) nach Anspruch 7, wobei jede der Vielzahl von Anwendungen Folgendes umfasst:
einen Erzeugungsteil, der konfiguriert ist, Betriebsbildschirmdaten zu erzeugen; und
einen Grafikwiedergabeteil, der konfiguriert ist, eine Grafikwiedergabe der Betriebsbildschirmdaten durchzuführen,
wobei der Erzeugungsteil die Betriebsbildschirmdaten basierend auf den Daten in Verbindung mit dem Bildschirmübergang und den Daten in Verbindung mit den GUI-Teilen erzeugt, die entsprechend einer Anweisung übertragen werden, die von dem Verwaltungsteil empfangenen Betriebsbildschirmdaten zu erzeugen, und
der Graphikwiedergabeteil die Graphikwiedergabe der erzeugten Betriebsbildschirmdaten auf einem Anzeigebildschirm der Anzeigeeinheit durchführt.

9. Authentifizierungssystem (1000) nach einem der Ansprüche 5 bis 8, wobei die Bildverarbeitungsvorrichtung ferner Folgendes umfasst:
eine Speichereinheit, die konfiguriert ist, die Vielzahl von Anwendungen zu speichern.

10. Computerlesbares Speichermedium, das ein Programm speichert, das, wenn es von einem Computer ausgeführt wird, den Computer dazu veranlasst, einen Prozess einer Bildverarbeitungsvorrichtung (100) durchzuführen, die mit einer Vielzahl von Anwendungen installierbar ist, um installierte Funktionen auszuführen, und Anzeigemittel umfasst, um Betriebsbildschirme der Vielzahl von Anwendungen anzuzeigen, wobei der Prozess Folgendes umfasst:
ein Aufbewahrungsverfahren, das den Computer dazu veranlasst, eine Übergangsanwendungsliste, die Informationen in Verbindung mit Anwendungen enthält, zwischen denen ein Bildschirmübergang unter der Vielzahl von Anwendungen möglich ist, und einen Bildschirmteil aufzubewahren, um eine Anwendung auf dem Betriebsbildschirm einer anderen Anwendung auf dem Betriebsbildschirm der Anwendung auszuwählen, wobei ein Bildschirmübergang ein direkter Übergang von einem Betriebsbildschirm einer Anwendung zu einem Betriebsbildschirm einer anderen Anwendung ist;
ein Spezifizierungsverfahren, um festzulegen, dass der Bildschirmteil auf den Anzeigemitteln angezeigt wird, basierend auf der Übergangsanwendungsliste;
ein Anzeigesteuerverfahren, um die Anzeigemittel so zu steuern, dass sie den Betriebsbildschirm der Anwendung und die Bildschirmteile, die durch die Spezifizierungsmittel festgelegt sind, auf eine überlagernde oder überdeckende Weise anzeigen, um den Bildschirmübergang zu dem Betriebsbildschirm der anderen Anwendung auszuwählen,
**dadurch gekennzeichnet, dass** das Spezifizierungsverfahren den Bildschirmteil festlegt, der der gesamten Vielzahl der Anwendungen in der Übergangsanwendungsliste entspricht, jedoch die Anwendung, die dem Betriebsbildschirm entspricht, der auf den Anzeigemitteln angezeigt wird, unter Steuerung der Anzeigesteuermittel von der Übergangsanwendungsliste ausschließt,
wobei das Anzeigesteuerverfahren den Computer dazu veranlasst, die Übergangsanwendungsliste basierend auf Anwendungsidentifizierungsinformation einer zur Verwendung zugelassenen Anwendungsliste zu erzeugen, die Anwendungen enthält, die für die Verwendung durch einen Benutzer zugelassen sind, und die Anwendung ausschließt, deren Betriebsbildschirm von der Übergangsanwendungsliste angezeigt wird, indem sie die Anwendungsidentifizierungsinformation der ausgewählten Anwendung aus der erzeugten Übergangsanwendungsliste löscht.

11. Computerlesbares Speichermedium nach Anspruch 10, wobei das Verfahren Folgendes umfasst:
ein Anweisungsverfahren, das den Computer dazu veranlasst, die Erzeugung von Betriebsbildschirmdaten einer Anwendung anzuweisen,
wobei das Anweisungsverfahren den Computer dazu veranlasst, die Erzeugung der Betriebsbildschirmdaten anzuweisen, indem Daten in Verbindung mit dem Bildschirmübergang einschließlich der Übergangsanwendungsliste, die die ausgewählte Anwendung ausschließt, und Daten in Verbindung mit den GUI-Teilen der anderen Anwendungen, zu der Anwendung deren Betriebsbildschirm angezeigt ist übertragen werden.

12. Computerlesbares Speichermedium nach Anspruch 11, wobei jede der Vielzahl von Anwendungen Folgendes umfasst:
einen Erzeugungsteil, der konfiguriert ist, Betriebsbildschirmdaten zu erzeugen; und
einen Grafikwiedergabeteil, der konfiguriert ist, eine Grafikwiedergabe der Betriebsbildschirmdaten durchzuführen,
wobei der Erzeugungsteil die Betriebsbildschirmdaten basierend auf den Daten in Verbindung mit dem Bildschirmübergang und den Daten in Verbindung mit den GUI-Teilen erzeugt, die entsprechend einer Anweisung übertragen werden, die von dem Verwaltungsteil empfangenen Betriebsbildschirmdaten zu erzeugen, und
der Graphikwiedergabeteil die Graphikwiedergabe der erzeugten Betriebsbildschirmdaten auf einem Anzeigebildschirm der Anzeigeeinheit durchführt.

13. Computerlesbares Speichermedium nach einem der Ansprüche 10 bis 12, wobei die Bildverarbeitungsvorrichtung ferner eine Verarbeitungseinheit umfasst,
**dadurch gekennzeichnet, dass**:
das Aufbewahrungsverfahren von einem Computer der Anzeigeeinheit durchgeführt wird; und
das Anzeigesteuerverfahren von einem Computer der Verarbeitungseinheit durchgeführt wird.

## Revendications

1. Appareil de traitement d'image (100) pouvant être installé avec une pluralité d'applications pour exécuter des fonctions installées, comprenant :
une unité de traitement conçue pour commander l'appareil de traitement d'image ;
un moyen d'affichage (6) permettant d'afficher des écrans de fonctionnement de la pluralité d'applications ;
un moyen de conservation (112) permettant de conserver une liste d'applications pouvant effectuer une transition qui comprend des informations liées aux applications entre lesquelles une transition d'écran est possible parmi la pluralité d'applications, et une partie d'écran pour sélectionner une transition d'écran vers un écran de fonctionnement d'une autre application sur l'écran de fonctionnement de l'application, une transition d'écran étant une transition directe d'un écran de fonctionnement d'une application à un écran de fonctionnement d'une autre application ;
un moyen de spécification destiné à spécifier la partie d'écran devant être affichée sur le moyen d'affichage (6) en fonction de la liste d'applications pouvant effectuer une transition ;
un moyen de commande d'affichage (110) destiné à commander le moyen d'affichage pour afficher, de manière superposée et chevauchante, l'écran de fonctionnement de l'application et la partie d'écran spécifiée par le moyen de spécification afin de sélectionner la transition d'écran vers l'écran de fonctionnement de l'autre application,
**caractérisé en ce que**
le moyen de spécification spécifie la partie d'écran correspondant à toutes de la pluralité des applications dans la liste d'applications pouvant effectuer une transition mais à l'exclusion, dans la liste d'applications pouvant effectuer une transition, de l'application correspondant à l'écran de fonctionnement affiché sur le moyen d'affichage sous la commande du moyen de commande d'affichage,
le moyen de commande d'affichage générant la liste d'applications pouvant effectuer une transition en fonction des informations d'identification d'application d'une liste d'applications à utilisation autorisée qui comprend des applications autorisées pour une utilisation par un utilisateur, et excluant l'application dont l'écran de fonctionnement est affiché à partir d'une liste d'applications pouvant effectuer une transition en effaçant les informations d'identification d'application de l'application sélectionnée de la liste générée d'applications pouvant effectuer une transition.

2. Appareil de traitement d'image (100) tel que défini dans la revendication 1, dans lequel le moyen de commande d'affichage comprend :
une partie d'instruction conçue pour ordonner la génération de données d'écran de fonctionnement d'une application,
la partie d'instruction ordonnant la génération des données d'écran de fonctionnement en transférant, à l'application sélectionnée, des données liées à la transition d'écran et comprenant la liste d'applications pouvant effectuer une transition à l'exclusion de l'application sélectionnée, et des données liées aux parties GUI des autres applications.

3. Appareil de traitement d'image (100) tel que défini dans la revendication 2, dans lequel chacune de la pluralité d'applications comprend :
une partie de génération conçue pour générer des données d'écran de fonctionnement ; et
une partie de rendu graphique conçue pour réaliser un rendu graphique des données d'écran de fonctionnement,
la partie de génération générant les données d'écran de fonctionnement en fonction des données liées à la transition d'écran et les données liées aux parties GUI transférées en fonction d'une instruction de générer les données d'écran de fonctionnement reçues depuis la partie de gestion, et
la partie de rendu graphique réalisant le rendu graphique des données générées d'écran de fonctionnement sur un écran d'affichage de l'unité d'affichage.

4. Appareil de traitement d'image (100) tel que défini dans l'une quelconque des revendications 1 à 3, dans lequel il est en outre prévu :
une unité de stockage conçue pour stocker la pluralité d'applications.

5. Système d'authentification (1000) comprenant :
l'appareil de traitement d'image (100) selon la revendication 1 ; et
un appareil de gestion d'authentification (200), couplé à l'appareil de traitement d'image (100) via un canal de données prédéterminé (N), et conçu pour gérer des restrictions d'utilisation d'équipement d'utilisateurs en fonction d'une authentification d'utilisateur reçue depuis l'appareil de traitement d'image (100),
l'appareil de gestion d'authentification comprenant :
une unité de commande conçue pour envoyer une réponse, comprenant une liste d'applications à utilisation autorisée qui comprend des applications autorisées pour une utilisation par un utilisateur authentifié, en réponse à une demande d'authentification d'utilisateur depuis l'appareil de traitement d'image.

6. Système d'authentification (1000) tel que défini dans la revendication 5, dans lequel le moyen de commande d'affichage exclue l'application dont l'écran de fonctionnement est affiché à partir de la liste d'applications pouvant effectuer une transition en effaçant les informations d'identification d'application de l'application dont l'écran de fonctionnement est affiché de la liste générée d'applications pouvant effectuer une transition.

7. Système d'authentification (1000) tel que défini dans la revendication 5 ou 6, dans lequel la partie de commande d'affichage comprend :
une partie d'instruction conçue pour ordonner la génération de données d'écran de fonctionnement d'une application,
la partie d'instruction ordonnant la génération des données d'écran de fonctionnement en transférant, à l'application sélectionnée, des données liées à la transition d'écran et comprenant la liste d'applications pouvant effectuer une transition à l'exclusion de l'application sélectionnée, et des données liées aux parties GUI des autres applications.

8. Système d'authentification (1000) tel que défini dans la revendication 7, dans lequel chacune de la pluralité d'applications comprend :
une partie de génération conçue pour générer des données d'écran de fonctionnement ; et
une partie de rendu graphique conçue pour réaliser un rendu graphique des données d'écran de fonctionnement,
la partie de génération générant les données d'écran de fonctionnement en fonction des données liées à la transition d'écran et les données liées aux parties GUI transférées en fonction d'une instruction pour générer les données d'écran de fonctionnement reçues depuis la partie de gestion, et
la partie de rendu graphique réalisant le rendu graphique des données générées d'écran de fonctionnement sur un écran d'affichage de l'unité d'affichage.

9. Système d'authentification (1000) tel que défini dans l'une quelconque des revendications 5 à 8, dans lequel l'appareil de traitement d'image comprend :
une unité de stockage conçue pour stocker la pluralité d'applications.

10. Support de stockage lisible par ordinateur qui stocke un programme qui, lorsqu'exécuté par un ordinateur, amène l'ordinateur à effectuer un processus d'un appareil de traitement d'image (100) qui peut être installé avec une pluralité d'applications pour réaliser des fonctions installées et comprend un moyen d'affichage permettant d'afficher des écrans d'opération d'affichage de la pluralité d'applications, ledit processus comprenant :
une procédure de conservation amenant l'ordinateur à conserver une liste d'applications pouvant effectuer une transition qui comprend des informations liées à des applications entre lesquelles une transition d'écran est possible parmi la pluralité d'applications, et une partie d'écran à sélectionner une application sur l'écran de fonctionnement d'une autre application de l'écran de fonctionnement de l'application, une transition d'écran étant une transition directe d'un écran de fonctionnement d'une application à un écran de fonctionnement d'une autre application ;
une procédure de spécification destinée à spécifier la partie d'écran devant être affichée dans le moyen d'affichage en fonction de la liste d'applications pouvant effectuer une transition ;
une procédure de commande d'affichage destinée à commander le moyen d'affichage pour afficher, de manière superposée et chevauchante, l'écran de fonctionnement de l'application et les parties d'écran spécifiées par la procédure de spécification de manière à sélectionner la transition d'écran vers l'écran de fonctionnement de l'autre application,
**caractérisé en ce que** la procédure de spécification spécifie la partie d'écran correspondant à toutes de la pluralité des applications dans la liste d'applications pouvant effectuer une transition mais à l'exclusion, dans la liste d'application pouvant effectuer une transition, de l'application correspondant à l'écran de fonctionnement affiché sur le moyen d'affichage sous commande de la procédure de commande d'affichage,
la procédure de commande d'affichage amenant l'ordinateur à générer la liste d'applications pouvant effectuer une transition en fonction d'informations d'identification d'application d'une liste d'applications à utilisation autorisée qui comprend des applications autorisées pour une utilisation par un utilisateur, et exclure l'application dont l'écran de fonctionnement est affiché depuis la liste d'applications pouvant effectuer une transition en effaçant les informations d'identification d'application de l'application sélectionnée de la liste générée d'applications pouvant effectuer une transition.

11. Support de stockage lisible par ordinateur tel que défini dans la revendication 10, dans lequel la procédure comprend :
une procédure d'instruction amenant l'ordinateur à ordonner la génération de données d'écran de fonctionnement d'une application,
la procédure d'instruction amenant l'ordinateur à ordonner la génération des données d'écran de fonctionnement en transférant, à l'application dont l'écran de fonctionnement est affiché, des données liées à la transition d'écran et comprenant la liste d'applications pouvant effectuer une transition à l'exclusion de l'application sélectionnée, et des données liées aux parties GUI des autres applications.

12. Support de stockage lisible par ordinateur tel que défini dans la revendication 11, dans lequel chacune de la pluralité d'applications comprend :
une partie de génération conçue pour générer des données d'écran de fonctionnement ; et
une partie de rendu graphique conçue pour réaliser un rendu graphique des données d'écran de fonctionnement,
la partie de génération générant les données d'écran de fonctionnement en fonction des données liées à la transition d'écran et les données liées aux parties GUI transférées en fonction d'une instruction de générer les données d'écran de fonctionnement reçues depuis la partie de gestion, et
la partie de rendu graphique réalisant le rendu graphique des données générées d'écran de fonctionnement sur un écran d'affichage de l'unité d'affichage,

13. Support de stockage lisible par ordinateur tel que défini dans l'une quelconque des revendications 10 à 12, dans lequel l'appareil de traitement d'image comprend en outre une unité de traitement,
**caractérisé en ce que** :
la procédure de conservation est réalisée par un ordinateur de l'unité d'affichage ; et
la procédure de commande d'affichage est exécutée par un ordinateur de l'unité de traitement.
